# EUROPÄISCHE PATENTSCHRIFT

(11) **EP 3 395 144 B1**
(45) Veröffentlichungstag und Bekanntmachung des Hinweises auf die Patenterteilung: **25.12.2019**
(21) Anmeldenummer: 18401033.8
(22) Anmeldetag: 11.04.2018
(51) Int. Cl.: A01C 7/20, A01C 5/06

(54) **SÄMASCHINE ZUM AUSBRINGEN VON SAATGUT ODER DÜNGER**
SOWING MACHINE FOR SPREADING SEEDS OR FERTILISER
SEMOIR PERMETTANT DE RÉPANDRE DES SEMENCES OU DES ENGRAIS

(30) Priorität: 27.04.2017 DE 102017109036
(43) Veröffentlichungstag der Anmeldung: 31.10.2018
(60) Teilanmeldung: 19170730.6
(73) Patentinhaber: Amazonen-Werke H. Dreyer GmbH & Co. KG, 49205 Hasbergen (DE)
(72) Erfinder: Schröder, Olaf, 27798 Hude (DE); Helms, Helge, 26125 Oldenburg (DE); Lücking, Florian, 26689 Godensholt (DE); Stier, Roy, 26121 Oldenburg (DE); Heitkamp, Alexander, 48249 Dülmen (DE)

(56) Entgegenhaltungen:
- WO-A1-99/39563
- WO-A1-2016/048167
- CA-A1- 2 528 468
- DE-A1- 2 728 006

## Beschreibung

Die Erfindung betrifft eine Sämaschine zum Ausbringen von Saatgut oder Dünger nach dem Oberbegriff des Patentanspruchs 1 und ein System nach dem Patentanspruch 12.

Gattungsgemäße Sämaschinen weisen üblicherweise mehrere Säschare zur Ablage von Saatgut oder Dünger auf. Die optimale Ablagetiefe ist dabei abhängig von dem auszubringenden Saatgut oder Dünger. Wenn beim Ablegen des Saatguts oder des Düngers die optimale Ablagetiefe nicht eingehalten wird, kann es zu erheblichen Beeinträchtigungen des Ertrags oder der Düngerwirkung kommen.

Die optimale Ablagetiefe kann bereits bei unterschiedlichen Saatguttypen, wie beispielsweise Getreidesaat und Grünsaat, um mehrere Zentimeter variieren. Um den unterschiedlichen Anforderungen an die Ablagetiefe von Saatgut und Dünger gerecht zu werden, werden bereits Sämaschinen eingesetzt, bei welchen die Ablagetiefe für das Saatgut oder den Dünger eingestellt werden kann. Derartige Sämaschinen sind beispielsweise aus den Druckschriften DE 10 2015 101 255 A1 und EP 2 774 466 B1 bekannt.

Es besteht jedoch weiterhin das Problem, dass sämtliche Säschare bekannter Sämaschinen stets eine einheitliche Ablagetiefe aufweisen, sodass während des Ausbringvorgangs entweder nur ein Saatguttyp oder Dünger in der optimalen Ablagetiefe abgelegt werden kann oder beim Ausbringen von Saatguttypen oder Düngern mit unterschiedlichen Anforderungen an die Ablagetiefe ein Kompromiss bei der Einstellung der Ablagetiefe gefunden werden muss, sodass zumindest ein Saatguttyp oder ein Dünger in einer nicht-optimalen Ablagetiefe abgelegt wird.

Eine weitere Sämaschine ist aus der Druckschrift WO 2016/048167 A1 bekannt. Diese Sämaschine weist Säschare auf, deren Ablagetiefe individuell einstellbar ist und somit dazu eingerichtet sind, die gleichzeitige Ablage von Saatgut oder Dünger in unterschiedlichen Ablagetiefen zu erlauben. Ferner sind die Säschare jeweils über eine Scharhalterung mit einer in Fahrtrichtung hinter dem Säschar angeordneten Rolle gekoppelt, wobei die Rolle zerstörungsfrei austauschbar ist.

Die der Erfindung zugrunde liegende Aufgabe besteht somit darin, das gleichzeitige Ausbringen von Saatguttypen oder Düngern zu verbessern, welche unterschiedliche Anforderungen an die Ablagetiefe aufweisen.

Die Aufgabe wird gelöst durch eine Sämaschine mit den Merkmalen des Anspruchs 1.

Die Erfindung macht sich die Erkenntnis zunutze, dass das Ausbringen von Saatguttypen oder Düngern mit unterschiedlichen Anforderungen an die Ablagetiefe bereits dadurch erheblich verbessert werden kann, dass ein oder mehrere Säschare eine erste Ablagetiefe aufweisen und ein oder mehrere Säschare eine zweite Ablagetiefe aufweisen. Dadurch, dass ein oder mehrere Säschare auf eine erste Ablagetiefe und gleichzeitig ein oder mehrere Säschare auf eine zweite Ablagetiefe einstellbar sind, wird die Notwendigkeit einer Kompromissfindung hinsichtlich der Ablagetiefe beim Ausbringen von unterschiedlichen Saatguttypen oder Düngern überwunden. Beispielsweise kann mit der erfindungsgemäßen Sämaschine während eines Ausbringvorgangs eine Getreidesaat in einer ersten Ablagetiefe und eine Grünsaat in einer zweiten Ablagetiefe abgelegt werden. Dies erlaubt beispielsweise die Ernte des Getreides in dem ersten Jahr nach der Aussaat, wobei die aus der Grünsaat entstehenden Pflanzen in den zwei darauffolgenden Jahren geerntet werden können. Die Säschare können jeweils eine oder mehrere Säscheiben umfassen. Beispielsweise sind die Säschare jeweils als Doppelscheibensäschar ausgebildet.

In einer besonders bevorzugten Ausführungsform der erfindungsgemäßen Sämaschine sind einzelne oder sämtliche Säschare jeweils an einer Scharaufhängung befestigt, welche eine oder mehrere längenveränderliche Bestandteile aufweist, wobei eine Längenveränderung des einen oder der mehreren längenveränderlichen Bestandteile eine Veränderung der Ablagetiefe des an der Scharaufhängung befestigten Säschars verursacht. Beispielsweise kann das eine oder können die mehreren längenveränderlichen Bestandteile von einer oder mehreren Scharaufhängungen auf eine erste Länge eingestellt werden, wobei gleichzeitig das eine oder die mehreren längenveränderlichen Bestandteile von einer oder mehreren Scharaufhängungen auf eine zweite Länge eingestellt werden können. Aus den unterschiedlichen Längen resultieren unterschiedliche Ablagetiefen der an den jeweiligen Scharaufhängungen befestigten Säschare. Die Einstellung der Länge des einen oder der mehreren längenveränderlichen Bestandteile kann entweder einzeln für jede Scharaufhängung oder gekoppelt für mehrere Scharaufhängungen gleichzeitig erfolgen. Die Einstellung der Länge des einen oder der mehreren längenveränderlichen Bestandteile kann dabei manuell oder durch die Bedienung einer gesteuerten Betätigungseinrichtung erfolgen.

In einer anderen bevorzugten Ausführungsform der erfindungsgemäßen Sämaschine ist die Scharaufhängung als Parallelogramm-Gestänge mit einem Unterlenker und einem Oberlenker ausgebildet, wobei der Unterlenker und/oder der Oberlenker längenveränderlich ausgebildet sind. Durch die Veränderung der Länge des Unterlenkers und/oder des Oberlenkers wird die Konfiguration des Parallelogramm-Gestänges derart verändert, dass das an der Scharaufhängung befestigte Säschar zumindest in eine vertikale Richtung ausgelenkt wird, da die Relativposition der Anlenkpunkte von Unterlenker und Oberlenker durch die Längenveränderung des Unterlenkers und/oder des Oberlenkers zwangsläufig verändert wird.

In einer Weiterbildung der erfindungsgemäßen Sämaschine sind der Oberlenker und/oder der Unterlenker mehrteilig ausgebildet, wobei zumindest zwei Teile dazu eingerichtet sind, zur Veränderung der Lenkerlänge in unterschiedlichen Relativpositionen aneinander befestigt zu werden. Zur Veränderung der Lenkerlänge können die zwei Teile beispielsweise axial zueinander verschoben werden. Alternativ kann die Neigung zwischen zwei gelenkig miteinander verbundenen Teilen zur Einstellung der Lenkerlänge verändert werden. In einer alternativen Ausführungsform kann der Oberlenker und/oder der Unterlenker ein elektrisch, hydraulisch oder pneumatisch einstellbares Stellglied umfassen, mittels welchem die Lenkerlänge einstellbar ist. Das Stellglied kann beispielsweise ein Einstellzylinder sein.

In einer anderen bevorzugten Ausführungsform der erfindungsgemäßen Sämaschine sind die zwei Teile als gelochte Streben ausgebildet, welche zur Aufnahme von einem oder mehreren Befestigungsgliedern ausgebildet sind. Die Befestigungsglieder sind vorzugsweise als Schrauben-Mutter-Kombinationen, Stifte oder Bolzen ausgebildet. Die Veränderung der Lenkerlänge kann dabei beispielsweise dadurch erfolgen, dass die gelochten Streben axial derart gegeneinander verschoben werden, bis die gewünschte Lenkerlänge erreicht ist, wobei die eingestellte Relativposition zwischen den gelochten Streben mittels des einen oder der mehreren Befestigungsglieder festgestellt wird. Hierzu können die Befestigungsglieder durch in Deckung gebrachte Lochsegmente der Streben geschoben werden.

Ferner ist eine erfindungsgemäße Sämaschine bevorzugt, bei welcher die Säschare einer ersten Gruppe von Säscharen jeweils eine erste Ablagetiefe aufweisen und die Säschare einer zweiten Gruppe von Säscharen jeweils eine zweite Ablagetiefe aufweisen, wobei die erste Ablagetiefe sich von der zweiten Ablagetiefe unterscheidet. Beispielsweise unterscheidet sich die Ablagetiefe der Säschare der ersten Gruppe von Säscharen von der Ablagetiefe der Säschare der zweiten Gruppe von Säscharen um einen Ablagetiefendifferenzwert in dem Bereich zwischen 5 mm und 50 mm. Somit kann mittels der Säschare der ersten Gruppe von Säscharen beispielsweise Gerste auf eine Ablagetiefe von 3 bis 4 cm und mit den Säscharen der zweiten Gruppe von Säscharen Gras oder Klee auf eine Ablagetiefe von 1 bis 2 cm abgelegt werden.

In einer Weiterbildung der erfindungsgemäßen Sämaschine sind die Säschare der ersten Gruppe von Säscharen nebeneinander in einer ersten Querreihe angeordnet und die Säschare der zweiten Gruppe von Säscharen sind nebeneinander in einer zweiten Querreihe angeordnet, wobei die erste Querreihe beabstandet von der zweiten Querreihe angeordnet ist. Vorzugsweise verlaufen die erste Querreihe und die zweite Querreihe quer zur Fahrtrichtung der Sämaschine. Die erste Querreihe kann in Fahrtrichtung vor der zweiten Querreihe verlaufen. Alternativ kann die erste Querreihe in Fahrtrichtung hinter der zweiten Querreihe verlaufen. Die Säschare der ersten Querreihe sind somit versetzt von den Säscharen der zweiten Querreihe angeordnet. Es ist ferner bevorzugt, dass seitlich benachbarte Säschare unterschiedliche Ablagetiefen aufweisen und somit einer unterschiedlichen Gruppe von Säscharen zugeordnet sind. Zwischen zwei Säscharen aus der ersten Gruppe von Säscharen können jeweils ein oder mehrere Säschare der zweiten Gruppe von Säscharen angeordnet sein. Ferner können zwischen zwei Säscharen aus der zweiten Gruppe von Säscharen jeweils ein oder mehrere Säschare der ersten Gruppe von Säscharen angeordnet sein. Somit kann auch ein geeigneter Reihenabstand für unterschiedliche Saatguttypen oder Dünger eingestellt werden.

Außerdem ist eine erfindungsgemäßen Sämaschine bevorzugt, bei welcher die mehreren Säschare jeweils über eine Scharhalterung mit einer in Fahrtrichtung hinter dem Säschar angeordneten Rolle gekoppelt sind, wobei die Relativposition des Säschars und der Rolle veränderbar ist. Die Rolle kann beispielsweise als Tiefenführungsrolle bzw. als Andruckrolle ausgebildet sein. Durch eine Veränderung der Relativposition des Säschars und der Rolle kann ebenfalls eine Anpassung der Ablagetiefe des Säschars umgesetzt werden, da die Rolle das Säaggregat, an welchem auch das Säschar befestigt ist, gegenüber dem Boden abstützt. Somit resultiert aus einer Vergrößerung des vertikalen Abstands zwischen dem Abgabebereich des Säschars und der Aufstandsfläche der Rolle eine Vergrößerung der Ablagetiefe des Säschars, wobei aus einer Verringerung des vertikalen Abstands zwischen dem Abgabebereich des Säschars und der Aufstandsfläche der Rolle eine Verringerung der Ablagetiefe des Säschars resultiert. Die Relativposition des Säschars und der Rolle kann beispielsweise durch die Verstellung von einer oder mehreren Streben der Scharhalterung erfolgen.

Bei der erfindungsgemäßen Sämaschine sind die mehreren Säschare jeweils über eine Scharhalterung mit einer in Fahrtrichtung hinter dem Säschar angeordneten Rolle gekoppelt, wobei die Rolle zerstörungsfrei austauschbar ist, insbesondere durch eine Austauschrolle mit einem abweichenden Rollendurchmesser. In einer weiteren bevorzugten Ausführungsform ist die Rolle werkzeuglos austauschbar. Durch den Austausch der Rolle kann ebenfalls die Ablagetiefe des mit der Rolle gekoppelten Säschars eingestellt werden. Bei der Verwendung einer vergleichsweise kleinen Rolle ergibt sich eine große Ablagetiefe. Bei der Verwendung einer vergleichsweisen großen Rolle ergibt sich eine geringe Ablagetiefe. Somit kann der Benutzer der Sämaschine abhängig von dem auszubringenden Saatgut oder Dünger die Sämaschine mit Rollen ausstatten, deren Durchmesser die Einstellung der geeigneten Ablagetiefe bedingt. Beispielsweise verfügt der Benutzer der Sämaschine über einen oder mehrere Sätze von Austauschrollen, um unterschiedliche Kombinationen von Ablagetiefen bei der Sämaschine realisieren zu können.

Die erfindungsgemäße Sämaschine ist dadurch gekennzeichnet, dass die mit den Säscharen gekoppelten Rollen unterschiedliche Rollendurchmesser aufweisen, wobei der Rollendurchmesser der Rolle die Ablagetiefe des jeweiligen Säschars beeinflusst. Vorzugsweise sind die mit den Säscharen gekoppelten Rollen, welche unterschiedliche Rollendurchmesser aufweisen, wiederum zerstörungsfrei austauschbar. Somit können entsprechende Sämaschinen sowohl zum gleichzeitigen Ablegen von Saatgut oder Dünger in unterschiedlichen Ablagetiefen als auch zum Ablegen von Saatgut oder Dünger in einheitlichen Ablagetiefen Verwendung finden.

In einer besonders bevorzugten Ausführungsform der erfindungsgemäßen Sämaschine sind die Säschare einer ersten Gruppe von Säscharen jeweils mit einer Rolle mit einem ersten Rollendurchmesser gekoppelt und die Säschare einer zweiten Gruppe von Säscharen sind jeweils mit einer Rolle mit einem zweiten Rollendurchmesser gekoppelt, wobei sich der erste Rollendurchmesser von dem zweiten Rollendurchmesser unterscheidet. Die Säschare der ersten Gruppe von Säscharen sind vorzugsweise nebeneinander in einer ersten Querreihe angeordnet, wobei die Säschare der zweiten Gruppe von Säscharen nebeneinander in einer zweiten Querreihe angeordnet sind und die erste Querreihe beabstandet von der zweiten Querreihe angeordnet ist. Die erste Querreihe und die zweite Querreihe verlaufen dabei vorzugsweise quer zur Fahrtrichtung der Sämaschine. Die erste Querreihe kann in Fahrtrichtung vor der zweiten Querreihe verlaufen. Ferner kann die erste Reihe in Fahrtrichtung hinter der zweiten Querreihe verlaufen.

In einer anderen bevorzugten Ausführungsform der erfindungsgemäßen Sämaschine umfasst die Sämaschine einen ersten Behälter zur Bevorratung von Saatgut oder Dünger und einen zweiten Behälter zur Bevorratung von Saatgut oder Dünger, wobei das Saatgut oder der Dünger aus dem ersten Behälter den Säscharen der ersten Gruppe von Säscharen zuleitbar ist und das Saatgut oder der Dünger aus dem zweiten Behälter den Säscharen der zweiten Gruppe von Säscharen zuleitbar ist. Dadurch, dass das Saatgut oder der Dünger aus dem ersten Behälter den Säscharen der ersten Gruppe von Säscharen zuleitbar und das Saatgut oder der Dünger aus dem zweiten Behälter den Säscharen der zweiten Gruppe von Säscharen zuleitbar ist, kann ein erstes Saatgut, wie beispielsweise Getreidesaat, in einer ersten Ablagetiefe und gleichzeitig ein zweites Saatgut, beispielsweise Grünsaat, in einer zweiten Ablagetiefe abgelegt werden.

Eine Weiterbildung der erfindungsgemäßen Sämaschine weist eine zentrale Verstelleinrichtung zum zentralen Verstellen der Ablagetiefe und/oder des Schardrucks sämtlicher Säschare auf, wobei während dem zentralen Verstellen der Ablagetiefe und/oder des Schardrucks sämtlicher Säschare die voreingestellten Ablagetiefenunterschiede der mehreren Säschare beibehalten werden. Somit kann die Ablagetiefe sämtlicher Säschare um einen absoluten Wert verringert oder vergrößert werden, wobei die Relativpositionen der einzelnen Säschare zueinander nicht beeinflusst werden. In gleicher Weise kann der Schardruck sämtlicher Säschare erhöht oder verringert werden, ohne die voreingestellten Ablagetiefenunterschiede zu verändern.

Die der Erfindung zugrunde liegende Aufgabe wird ferner durch ein System der eingangs genannten Art gelöst, wobei die Sämaschine des Systems nach einer der vorstehend beschriebenen Ausführungsformen ausgebildet ist. Das System weist ferner einen Satz von Austauschrollen auf, wobei die Austauschrollen einen Rollendurchmesser aufweisen, welcher sich von dem Rollendurchmesser der Rollen der Sämaschine unterscheidet. Die Austauschrollen sind dazu ausgebildet, zur Anpassung der Ablagetiefe einzelner Säschare die mit den einzelnen Säscharen gekoppelten Rollen zu ersetzen. Hinsichtlich weiterer Vorteile und Modifikationen des erfindungsgemäßen Systems wird auf die Vorteile und Modifikationen der erfindungsgemäßen Sämaschine verwiesen.

Weitere Einzelheiten der Erfindung sind der Figurenbeschreibung und den Zeichnungen zu entnehmen. Es zeigen
- Fig. 1: Teile einer erfindungsgemäßen Sämaschine in einer perspektivischen Darstellung;
- Fig. 2: ein Säaggregat einer erfindungsgemäßen Sämaschine mit einer ersten Rolle in einer Seitenansicht;
- Fig. 3: das in der Fig. 3 dargestellte Säaggregat mit einer zweiten Rolle in einer Seitenansicht;
- Fig. 4: ein Säaggregat einer erfindungsgemäßen Sämaschine in einem ersten Zustand in einer Seitenansicht; und
- Fig. 5: das in der Fig. 4 dargestellte Säaggregat in einem zweiten Zustand in einer Seitenansicht.

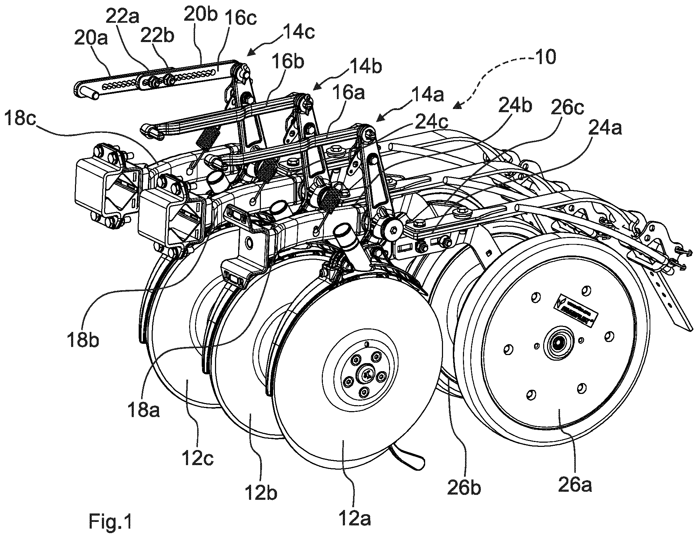

Die Fig. 1 zeigt drei Säschare 12a-12c einer Sämaschine 10 zum Ausbringen von Saatgut oder Dünger, wobei die Säschare 12a-12c jeweils an einer Scharaufhängung 14a-14c befestigt und dazu eingerichtet sind, das Saatgut oder den Dünger in einer voreingestellten Ablagetiefe abzulegen.

Die Scharaufhängungen 14a-14c sind jeweils als Parallelogramm-Gestänge ausgebildet und weisen einen Unterlenker 18a-18c und einen Oberlenker 16a-16c auf. Der Oberlenker 16c der Scharaufhängung 14c ist längenveränderlich ausgebildet und weist zwei als gelochte Streben ausgebildete Teile 20a, 20b auf, welche zur Veränderung der Lenkerlänge in unterschiedlichen Relativpositionen aneinander befestigt werden können. Die Befestigung der zwei Teile 20a, 20b erfolgt durch zwei Befestigungsglieder 22a, 22b, welche sich durch in Deckung gebrachte Löcher der zwei Teile 20a, 20b erstrecken und als Schrauben-Mutter-Kombinationen ausgebildet sind. Eine Längenveränderung des Oberlenkers 16c verursacht eine Veränderung der Ablagetiefe des an der Scharaufhängung 14c befestigten Säschars 12c.

Die Ablagetiefe des Säschars 12c kann somit abweichend von der Ablagetiefe der Säschare 12a, 12b eingestellt werden, sodass die Sämaschine 10 dazu eingerichtet ist, die gleichzeitige Ablage von Saatgut oder Dünger in unterschiedlichen Ablagetiefen zu erlauben.

Ferner sind die Säschare 12a-12c jeweils über eine Scharhalterung 24a-24c mit einer in Fahrtrichtung hinter dem Säschar 12a-12c angeordneten Rolle 26a-26c gekoppelt. Die jeweiligen Rollen 26a-26c sind als Tiefenführungsrolle ausgebildet und jeweils zerstörungsfrei austauschbar durch eine Austauschrolle mit einem abweichenden Rollendurchmesser. Durch das Ersetzen einer oder mehrerer der Rollen 26a-26c durch eine Austauschrolle mit einem abweichenden Rollendurchmesser kann ebenfalls die Ablagetiefe des jeweiligen Säschars 12a-12c verändert werden.

Beispielsweise kann die Sämaschine zwei separate Behälter zur Bevorratung von Saatgut oder Dünger umfassen, wobei ein erster Behälter zur Bevorratung eines ersten Saatguts oder Düngers dient und ein zweiter Behälter zur Bevorratung eines zweiten Saatguts oder Düngers dient. Das erste Saatgut oder der erste Dünger kann dann einer ersten Gruppe von Säscharen 12a, 12b zugeleitet werden, wobei das zweite Saatgut oder der zweite Dünger einer zweiten Gruppe von Säscharen 12c zugeleitet werden kann.

Da sich die Ablagetiefe der Säschare 12a, 12b der ersten Gruppe von Säscharen 12a, 12b von der Ablagetiefe der Säschare 12c der zweiten Gruppe von Säscharen 12c unterscheidet, erlaubt die Sämaschine 10 die gleichzeitige Ablage eines ersten Saatguts oder Düngers und eines zweiten Saatguts oder Düngers in unterschiedlichen Ablagetiefen.

Die Sämaschine 10 kann außerdem eine zentrale Verstelleinrichtung zum zentralen Verstellen der Ablagetiefe und/oder des Schardrucks sämtlicher Säschare 12a-12c aufweisen, wobei während dem zentralen Verstellen der Ablagetiefe und/oder des Schardrucks sämtlicher Säschare 12a-12c die voreingestellten Ablagetiefenunterschiede der mehreren Säschare 12a-12c beibehalten werden.

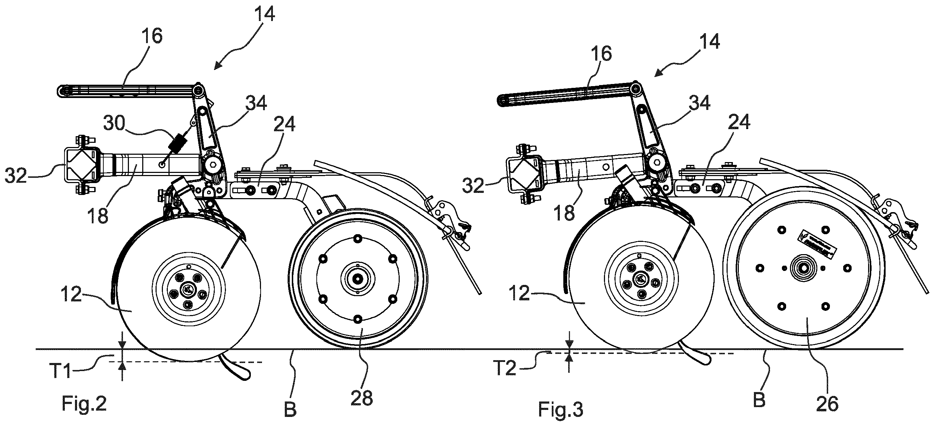

Die Fig. 2 und die Fig. 3 zeigen ein Säaggregat, bei welchem die Länge des Oberlenkers 16 der als Parallelogramm-Gestänge ausgebildeten Scharaufhängung 14 nicht längenveränderlich ist. Der Oberlenker 16 und der Unterlenker 18 sind über eine Koppelstrebe 34 miteinander verbunden, wobei zwischen dem Unterlenker 18 und der Koppelstrebe 34 ein als Schraubenfeder ausgebildetes Federelement 30 wirkt. Der Unterlenker 18 weist außerdem eine Befestigung 32 auf, mittels welcher der Unterlenker 18 an einem quer zur Fahrtrichtung verlaufenden Scharbalken befestigt werden kann.

In der Fig. 2 ist das Säschar 12 über eine Scharhalterung 24 mit einer in Fahrtrichtung hinter dem Säschar 12 angeordneten Rolle 28 gekoppelt, wobei die Rolle 28 zerstörungsfrei gegen eine Austauschrolle mit einem abweichenden Durchmesser austauschbar ist. Die Rolle 28 weist einen ersten Durchmesser auf und ist als Tiefenführungsrolle ausgebildet. Die Ablagetiefe T1 des Säschars 12 ist abhängig von dem Rollendurchmesser der Rolle 28. Die Ablagetiefe T1 ist der vertikale Abstand zwischen der Oberfläche des Bodens B und der Ablageposition des durch das Säschars 12 abgelegten Saatguts oder Düngers.

In der Fig. 3 ist das Säschar 12 aus der Fig. 2 dargestellt, wobei die Rolle 28 durch die Rolle 26 ausgetauscht wurde. Die Rolle 26 weist einen zweiten Durchmesser auf und ist als Tiefenführungsrolle ausgebildet. Aufgrund des größeren Durchmessers der Rolle 26 gegenüber dem Durchmesser der Rolle 28 ergibt sich eine neue Ablagetiefe T2 des Säschars 12, welche kleiner ist als die in Fig. 2 dargestellte Ablagetiefe T1.

Zur gleichzeitigen Realsierung unterschiedlicher Ablagetiefen T1, T2 ist es somit sinnvoll über ein System aus einer Sämaschine 10 zum Ausbringen von Saatgut oder Dünger und einen Satz von Austauschrollen 26 zu verfügen, wobei die Austauschrollen 26 einen Rollendurchmesser aufweisen, welcher sich von dem Rollendurchmesser der Rollen 28 der Sämaschine 10 unterscheidet, wobei die Austauschrollen 26 dazu ausgebildet sind, zur Anpassung der Ablagetiefe T1, T2 einzelner Säschare 12 die mit den einzelnen Säscharen 12 gekoppelten Rollen 28 zu ersetzen.

So ist beispielsweise eine Sämaschine konfigurierbar, bei welcher die Säschare 12 einer ersten Gruppe von Säscharen 12 jeweils mit einer Rolle 28 mit einem ersten Rollendurchmesser gekoppelt sind und die Säschare 12 einer zweiten Gruppe von Säscharen 12 jeweils mit einer Rolle 26 mit einem zweiten Rollendurchmesser gekoppelt sind, wobei sich der erste Rollendurchmesser von dem zweiten Rollendurchmesser unterscheidet. Die Säschare 12 der ersten Gruppe von Säscharen 12 sind dabei nebeneinander in einer ersten Querreihe angeordnet und die Säschare 12 der zweiten Gruppe von Säscharen 12 sind dabei nebeneinander in einer zweiten Querreihe angeordnet, wobei die erste Querreihe beabstandet von der zweiten Querreihe angeordnet ist.

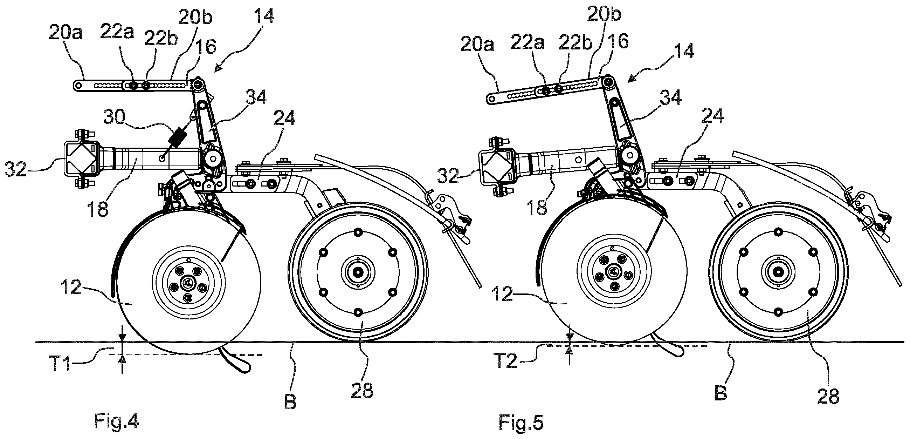

Die Fig. 4 und die Fig. 5 zeigen ein Säaggregat, bei welchem die Länge des Oberlenkers 16 der als Parallelogramm-Gestänge ausgebildeten Scharaufhängung 14 längenveränderlich ist. Hierzu weist der Oberlenker 16 zwei als gelochte Streben ausgebildete Teile 20a, 20b auf, welche zur Änderung der Lenkerlänge axial gegeneinander verschiebbar und durch Einsetzen von Befestigungsgliedern 22a, 22b in in Deckung gebrachte Löcher entsprechend feststellbar sind. Die Befestigungsglieder 22a, 22b sind dabei als Schrauben-Mutter-Kombinationen ausgeführt.

Der Oberlenker 16 der in der Fig. 4 dargestellten Scharaufhängung 14 weist eine erste Länge auf. Die Länge des Oberlenkers 16 beeinflusst die Ablagetiefe des Säschars 12. Entsprechend der ersten Länge des Oberlenkers 16 weist das Säschar in dem dargestellten Zustand eine erste Ablagetiefe T1 auf.

In der Fig. 5 ist das Säschar 12 aus der Fig. 4 dargestellt, wobei die Länge des Oberlenkers 16 verändert wurde. Aufgrund der Verlängerung des Oberlenkers 16 gegenüber dem in der Fig. 4 dargestellten Zustand des Oberlenkers 16 ergibt sich eine neue Ablagetiefe T2 des Säschars 12, welche kleiner ist als die in Fig. 4 dargestellte Ablagetiefe T1.

So ist beispielsweise eine Sämaschine konfigurierbar, bei welcher die Säschare 12 einer ersten Gruppe von Säscharen 12 jeweils eine erste Ablagetiefe T1 aufweisen und die Säschare 12 einer zweiten Gruppe von Säscharen 12 jeweils eine zweite Ablagetiefe T2 aufweisen, wobei die erste Ablagetiefe T1 sich von der zweiten Ablagetiefe T2 unterscheidet. Die Säschare 12 der ersten Gruppe von Säscharen 12 sind dabei nebeneinander in einer ersten Querreihe angeordnet und die Säschare 12 der zweiten Gruppe von Säscharen 12 sind dabei nebeneinander in einer zweiten Querreihe angeordnet, wobei die erste Querreihe beabstandet von der zweiten Querreihe angeordnet ist.

### Bezugszeichenliste

- 10: Sämaschine
- 12, 12a-12c: Säschare
- 14, 14a-14c: Scharaufhängungen
- 16, 16a-16c: Oberlenker
- 18, 18a-18c: Unterlenker
- 20a, 20b: Oberlenkerteile
- 22a, 22b: Befestigungsglieder
- 24, 24a-24c: Scharhalterungen
- 26, 26a-26c: Rollen
- 28: Rolle
- 30: Federelement
- 32: Befestigung
- 34: Koppelstrebe
- B: Boden
- T1, T2: Ablagetiefen

## Patentansprüche

1. Sämaschine (10) zum Ausbringen von Saatgut oder Dünger, mit
- mehreren Säscharen (12, 12a-12c) zur Ablage des Saatguts oder Düngers, wobei die Säschare (12, 12a-12c) jeweils dazu eingerichtet sind, das Saatgut oder den Dünger in einer voreingestellten Ablagetiefe (T1, T2) abzulegen;
wobei die Sämaschine (10) dazu eingerichtet ist, die gleichzeitige Ablage von Saatgut oder Dünger in unterschiedlichen Ablagetiefen (T1, T2) zu erlauben und die mehreren Säschare (12, 12a-12c) jeweils über eine Scharhalterung (24, 24a-24c) mit einer in Fahrtrichtung hinter dem Säschar (12, 12a-12c) angeordneten Rolle (26, 26a-26c, 28) gekoppelt sind, wobei die Rolle (26, 26a-26c, 28) zerstörungsfrei austauschbar ist, insbesondere durch eine Austauschrolle mit einem abweichenden Rollendurchmesser, **dadurch gekennzeichnet, dass** die mit den Säscharen (12, 12a-12c) gekoppelten Rollen (26, 26a-26c, 28) unterschiedliche Rollendurchmesser aufweisen, wobei der Rollendurchmesser der Rolle (26, 26a-26c, 28) die Ablagetiefe (T1, T2) des jeweiligen Säschars (12, 12a-12c) beeinflusst.

2. Sämaschine (10) nach Anspruch 1,
**dadurch gekennzeichnet, dass** einzelne oder sämtliche Säschare (12, 12a-12c) jeweils an einer Scharaufhängung (14, 14a-14c) befestigt sind, welche ein oder mehrere längenveränderliche Bestandteile aufweist, wobei eine Längenveränderung des einen oder der mehreren längenveränderlichen Bestandteile eine Veränderung der Ablagetiefe (T1, T2) des an der Scharaufhängung (14, 14a-14c) befestigten Säschars (12, 12a-12c) verursacht.

3. Sämaschine (10) nach Anspruch 2,
**dadurch gekennzeichnet, dass** die Scharaufhängung (14, 14a-14c) als Parallelogramm-Gestänge mit einem Unterlenker (18, 18a-18c) und einem Oberlenker (16, 16a-16c) ausgebildet ist, wobei der Unterlenker (18, 18a-18c) und/oder der Oberlenker (16, 16a-16c) längenveränderlich ausgebildet sind.

4. Sämaschine (10) nach Anspruch 3,
**dadurch gekennzeichnet, dass** der Oberlenker (16, 16a-16c) und/oder der Unterlenker (18, 18a-18c) mehrteilig ausgebildet sind, wobei zumindest zwei Teile (20a, 20b) dazu eingerichtet sind, zur Veränderung der Lenkerlänge in unterschiedlichen Relativpositionen aneinander befestigt zu werden.

5. Sämaschine (10) nach Anspruch 4,
**dadurch gekennzeichnet, dass** die zwei Teile (20a, 20b) als gelochte Streben ausgebildet sind, welche zur Aufnahme von einem oder mehreren Befestigungsgliedern (22a, 22b) ausgebildet sind.

6. Sämaschine (10) nach einem der vorstehenden Ansprüche,
**dadurch gekennzeichnet, dass** die Säschare (12, 12a-12c) einer ersten Gruppe von Säscharen (12, 12a-12c) jeweils eine erste Ablagetiefe (T1) aufweisen und die Säschare (12, 12a-12c) einer zweiten Gruppe von Säscharen (12, 12a-12c) jeweils eine zweite Ablagetiefe (T2) aufweisen, wobei die erste Ablagetiefe (T1) sich von der zweiten Ablagetiefe (T2) unterscheidet.

7. Sämaschine (10) nach Anspruch 6,
**dadurch gekennzeichnet, dass** die Säschare (12, 12a-12c) der ersten Gruppe von Säscharen (12, 12a-12c) nebeneinander in einer ersten Querreihe angeordnet sind und die Säschare (12, 12a-12c) der zweiten Gruppe von Säscharen (12, 12a-12c) nebeneinander in einer zweiten Querreihe angeordnet sind, wobei die erste Querreihe beabstandet von der zweiten Querreihe angeordnet ist.

8. Sämaschine (10) nach einem der vorstehenden Ansprüche,
**dadurch gekennzeichnet, dass** die mehreren Säschare (12, 12a-12c) jeweils über eine Scharhalterung (24, 24a-24c) mit einer in Fahrtrichtung hinter dem Säschar (12, 12a-12c) angeordneten Rolle (26, 26a-26c, 28) gekoppelt sind, wobei die Relativposition des Säschars (12, 12a-12c) und der Rolle (26, 26a-26c, 28) veränderbar ist.

9. Sämaschine (10) nach Anspruch 1,
**dadurch gekennzeichnet, dass** die Säschare (12, 12a-12c) einer ersten Gruppe von Säscharen (12, 12a-12c) jeweils mit einer Rolle (26, 26a-26c) mit einem ersten Rollendurchmesser gekoppelt sind und die Säschare (12, 12a-12c) einer zweiten Gruppe von Säscharen (12, 12a-12c) jeweils mit einer Rolle (28) mit einem zweiten Rollendurchmesser gekoppelt sind, wobei sich der erste Rollendurchmesser von dem zweiten Rollendurchmesser unterscheidet.

10. Sämaschine (10) nach Anspruch 6, 7 oder 9, mit
- einem ersten Behälter zur Bevorratung von Saatgut oder Dünger; und
- einem zweiten Behälter zur Bevorratung von Saatgut oder Dünger;
**dadurch gekennzeichnet, dass** das Saatgut oder der Dünger aus dem ersten Behälter den Säscharen (12, 12a-12c) der ersten Gruppe von Säscharen (12, 12a-12c) zuleitbar ist und das Saatgut oder der Dünger aus dem zweiten Behälter den Säscharen (12, 12a-12c) der zweiten Gruppe von Säscharen (12, 12a-12c) zuleitbar ist.

11. Sämaschine (10) nach einem der vorstehenden Ansprüche,
**gekennzeichnet durch** eine zentrale Verstelleinrichtung zum zentralen Verstellen der Ablagetiefe (T1, T2) und/oder des Schardrucks sämtlicher Säschare (12, 12a-12c), wobei während dem zentralen Verstellen der Ablagetiefe (T1, T2) und/oder des Schardrucks sämtlicher Säschare (12, 12a-12c) die voreingestellten Ablagetiefenunterschiede der mehreren Säschare (12, 12a-12c) beibehalten werden.

12. System, mit
- einer Sämaschine (10) zum Ausbringen von Saatgut oder Dünger nach einem der vorstehenden Ansprüche; und
- einem Satz von Austauschrollen mit einem Rollendurchmesser, welcher sich von dem Rollendurchmesser der Rollen (26, 26a-26c, 28) der Sämaschine (10) unterscheidet, wobei die Austauschrollen dazu ausgebildet sind, zur Anpassung der Ablagetiefe (T1, T2) einzelner Säschare (12, 12a-12c) die mit den einzelnen Säscharen (12, 12a-12c) gekoppelten Rollen (26, 26a-26c, 28) zu ersetzen.

## Claims

1. Seed drill (10) for spreading seeds or fertilizer, comprising
- multiple coulters (12, 12a-12c) for depositing the seed or fertilizer, wherein the coulters (12, 12a-12c) are each set up to deposit the seed or the fertilizer at a preset deposition depth (T1, T2),
wherein the seed drill (10) is set up to permit the simultaneous deposition of seed or fertilizer at different deposition depths (T1, T2), and the multiple coulters (12, 12a-12c) are each coupled via a coulter support (24, 24a-24c) to a roller (26, 26a-26c, 28) arranged after the coulter (12, 12a-12c) in the direction of travel, wherein the roller (26, 26a-26c, 28) is non-destructively replaceable, in particular by means of a replacement roller having a different roller diameter,
**characterized in that** the rollers (26, 26a-26c, 28) coupled to the coulters (12, 12a-12c) have different roller diameters, wherein the roller diameter of the roller (26, 26a-26c, 28) influences the deposition depth (T1, T2) of the respective coulter (12, 12a-12c).

2. Seed drill (10) according to Claim 1,
**characterized in that** individual or all coulters (12, 12a-12c) are each fixed to a coulter suspension (14, 14a-14c), which has one or more variable-length constituent parts, wherein a length change of the one or the multiple variable-length constituent parts causes a change in the deposition depth (T1, T2) of the coulter (12, 12a-12c) fixed to the coulter suspension (14, 14a-14c) .

3. Seed drill (10) according to Claim 2,
**characterized in that** the coulter suspension (14, 14a-14c) is configured as a parallelogram linkage with a lower link (18, 18a-18c) and an upper link (16, 16a-16c), wherein the lower link (18, 18a-18c) and/or the upper link (16, 16a-16c) are configured with a variable length.

4. Seed drill (10) according to Claim 3,
**characterized in that** the upper link (16, 16a-16c) and/or the lower link (18, 18a-18c) are formed from many parts, wherein at least two parts (20a, 20b) are set up to be fixed to each other in different relative positions to change the link length.

5. Seed drill (10) according to Claim 4,
**characterized in that** the two parts (20a, 20b) are formed as perforated struts, which are designed to receive one or more fixing members (22a, 22b).

6. Seed drill (10) according to one of the preceding claims,
**characterized in that** the coulters (12, 12a-12c) of a first group of coulters (12, 12a-12c) each have a first deposition depth (T1), and the coulters (12, 12a-12c) of a second group of coulters (12, 12a-12c) each have a second deposition depth (T2), wherein the first deposition depth (T1) differs from the second deposition depth (T2).

7. Seed drill (10) according to Claim 6,
**characterized in that** the coulters (12, 12a-12c) of the first group of coulters (12, 12a-12c) are arranged beside one another in a first transverse row, and the coulters (12, 12a-12c) of the second group of coulters (12, 12a-12c) are arranged beside one another in a second transverse row, wherein the first transverse row is arranged at a distance from the second transverse row.

8. Seed drill (10) according to one of the preceding claims,
**characterized in that** the multiple coulters (12, 12a-12c) are each connected via a coulter support (24, 24a-24c) to a roller (26, 26a-26c, 28) arranged after the coulter (12, 12a-12c) in the direction of travel, wherein the relative position of the coulter (12, 12a-12c) and the roller (26, 26a-26c) is variable.

9. Seed drill (10) according to Claim 1,
**characterized in that** the coulters (12, 12a-12c) of a first group of coulters (12, 12a-12c) are each connected to a roller (26, 26a-26c) with a first roller diameter, and the coulters (12, 12a-12c) of a second group of coulters (12, 12a-12c) are each connected to a roller (28) with a second roller diameter, wherein the first roller diameter differs from the second roller diameter.

10. Seed drill (10) according to Claim 6, 7 or 9, comprising
- a first container for storing seed or fertilizer; and
- a second container for storing seed or fertilizer;
**characterized in that** the seed or the fertilizer can be led out of the first container to the coulters (12, 12a-12c) of the first group of coulters (12, 12a-12c), and the seed or the fertilizer can be led out of the second container to the coulters (12, 12a-12c) of the second group of coulters (12, 12a-12c).

11. Seed drill (10) according to one of the preceding claims,
**characterized by** a central adjusting device for the central adjustment of the deposition depth (T1, T2) and/or the coulter pressure of all the coulters (12, 12a-12c), wherein, during the central adjustment of the deposition depth (T1, T2) and/or of the coulter pressure of all the coulters (12, 12a-12c), the preset deposition depth differences of the multiple coulters (12, 12a-12c) are maintained.

12. System comprising
- a seed drill (10) for spreading seed or fertilizer according to one of the preceding claims; and
- a set of replacement rollers having a roller diameter which differs from the roller diameter of the rollers (26, 26a-26c, 28) of the seed drill (10), wherein the replacement rollers are designed to replace the rollers (26, 26a-26c, 28) coupled to the individual coulters (12, 12a-12c) to adapt the deposition depth (T1, T2) of individual coulters (12, 12a-12c).

## Revendications

1. Semoir (10) permettant d'épandre des semences ou de l'engrais, comprenant
- plusieurs socs de semoir (12, 12a-12c) pour le dépôt des semences ou de l'engrais, les socs de semoir (12, 12a-12c) étant respectivement conçus pour déposer les semences ou l'engrais à une profondeur de dépôt (T1, T2) pré-réglée ;
le semoir (10) étant conçu pour permettre le dépôt simultané de semences ou d'engrais à différentes profondeurs de dépôt (T1, T2) et les multiples socs de semoir (12, 12a-12c) étant accouplés respectivement par le biais d'un support de soc (24, 24a-24c) à un rouleau (26, 26a-26c, 28) disposé derrière le soc de semoir (12, 12a-12c) dans la direction de conduite, le rouleau (26, 26a-26c, 28) pouvant être remplacé de manière non destructive, en particulier par un rouleau de remplacement présentant un diamètre de rouleau différent,
**caractérisé en ce que** les rouleaux (26, 26a-26c, 28) accouplés aux socs de semoir (12, 12a-12c) présentent différents diamètres de rouleau, le diamètre du rouleau (26, 26a-26c, 28) influençant la profondeur de dépôt (T1, T2) du soc de semoir (12, 12a-12c) respectif.

2. Semoir (10) selon la revendication 1,
**caractérisé en ce que** des socs de semoir individuels ou tous les socs de semoir (12, 12a-12c) sont fixés respectivement à une suspension de soc (14, 14a-14c), laquelle comprend un ou plusieurs composants de longueur variable, une variation de longueur de l'un des composants ou des multiples composants de longueur variable provoquant une variation de la profondeur de dépôt (T1, T2) du soc de semoir (12, 12a-12c) fixé à la suspension de soc (14, 14a-14c).

3. Semoir (10) selon la revendication 2,
**caractérisé en ce que** la suspension de soc (14, 14a-14c) est réalisée sous forme de tringlerie en parallélogramme comprenant un bras inférieur (18, 18a-18c) et un bras supérieur (16, 16a-16c), le bras inférieur (18, 18a-18c) et/ou le bras supérieur (16, 16a-16c) étant réalisés de manière à présenter une longueur variable.

4. Semoir (10) selon la revendication 3,
**caractérisé en ce que** le bras supérieur (16, 16a-16c) et/ou le bras inférieur (18, 18a-18c) sont réalisés en plusieurs parties, au moins deux parties (20a, 20b) étant conçues pour être fixées l'une à l'autre dans différentes positions relatives pour faire varier la longueur de bras.

5. Semoir (10) selon la revendication 4,
**caractérisé en ce que** les deux parties (20a, 20b) sont réalisées sous forme de barres perforées, lesquelles sont réalisées pour recevoir un ou plusieurs éléments de fixation (22a, 22b).

6. Semoir (10) selon l'une des revendications précédentes,
**caractérisé en ce que** les socs de semoir (12, 12a-12c) d'un premier groupe de socs de semoir (12, 12a-12c) présentent respectivement une première profondeur de dépôt (T1) et les socs de semoir (12, 12a-12c) d'un deuxième groupe de socs de semoir (12, 12a-12c) présentent respectivement une deuxième profondeur de dépôt (T2), la première profondeur de dépôt (T1) étant différente de la deuxième profondeur de dépôt (T2).

7. Semoir (10) selon la revendication 6,
**caractérisé en ce que** les socs de semoir (12, 12a-12c) du premier groupe de socs de semoir (12, 12a-12c) sont juxtaposés dans une première rangée transversale et les socs de semoir (12, 12a-12c) du deuxième groupe de socs de semoir (12, 12a-12c) sont juxtaposés dans une deuxième rangée transversale, la première rangée transversale étant disposée de manière espacée de la deuxième rangée transversale.

8. Semoir (10) selon l'une des revendications précédentes,
**caractérisé en ce que** les multiples socs de semoir (12, 12a-12c) sont accouplés respectivement par le biais d'un support de soc (24, 24a-24c) à un rouleau (26, 26a-26c, 28) disposé derrière le soc de semoir (12, 12a-12c) dans la direction de conduite, la position relative du soc de semoir (12, 12a-12c) et du rouleau (26, 26a-26c, 28) étant variable.

9. Semoir (10) selon la revendication 1,
**caractérisé en ce que** les socs de semoir (12, 12a-12c) d'un premier groupe de socs de semoir (12, 12a-12c) sont accouplés respectivement à un rouleau (26, 26a-26c) présentant un premier diamètre de rouleau et les socs de semoir (12, 12a-12c) d'un deuxième groupe de socs de semoir (12, 12a-12c) sont accouplés respectivement à un rouleau (28) présentant un deuxième diamètre de rouleau, le premier diamètre de rouleaux étant différent du deuxième diamètre de rouleau.

10. Semoir (10) selon la revendication 6, 7 ou 9, comprenant
- un premier récipient de stockage de semences ou d'engrais ; et
un deuxième récipient de stockage de semences ou d'engrais ;
**caractérisé en ce que** les semences ou l'engrais provenant du premier récipient peuvent être amené(e)(s) aux socs de semoir (12, 12a-12c) du premier groupe de socs de semoir (12, 12a-12c) et les semences ou l'engrais provenant du deuxième récipient peuvent être amené(e)(s) aux socs de semoir (12, 12a-12c) du deuxième groupe de socs de semoir (12, 12a-12c).

11. Semoir (10) selon l'une des revendications précédentes, **caractérisé par** un dispositif de réglage central servant au réglage central de la profondeur de dépôt (T1, T2) et/ou de la pression de soc de tous les socs de semoir (12, 12a-12c), la différence de profondeur de dépôt pré-réglée des multiples socs de semoir (12, 12a-12c) étant maintenue pendant le réglage central de la profondeur de dépôt (T1, T2) et/ou de la pression de soc de tous les socs de semoir (12, 12a-12c) .

12. Système, comprenant
- un semoir (10) permettant d'épandre des semences ou de l'engrais selon l'une des revendications précédentes ; et
- un ensemble de rouleaux de remplacement présentant un diamètre de rouleau qui est différent du diamètre des rouleaux (26, 26a-26c, 28) du semoir (10), les rouleaux de remplacement étant réalisés pour remplacer les rouleaux (26, 26a-26c, 28) accouplés aux socs de semoir individuels (12, 12a-12c) pour adapter la profondeur de dépôt (T1, T2) de socs de semoir individuels (12, 12a-12c).
